Europäisches Patentamt

European Patent Office

Office européen des brevets

(11) Numéro de publication : **0 325 873 B1**

# (12) FASCICULE DE BREVET EUROPEEN

(45) Date de publication du fascicule du brevet :
26.02.92 Bulletin 92/09

(51) Int. Cl.⁵ : **F17D 1/08, F16L 59/06, F17C 6/00**

(21) Numéro de dépôt : **88403252.5**

(22) Date de dépôt : **20.12.88**

(54) **Ligne de transfert de gaz liquéfié comportant au moins une dérivation des vapeurs de ce gaz.**

(30) Priorité : **22.12.87 FR 8717889**

(43) Date de publication de la demande :
**02.08.89 Bulletin 89/31**

(45) Mention de la délivrance du brevet :
**26.02.92 Bulletin 92/09**

(84) Etats contractants désignés :
**CH DE GB IT LI NL**

(56) Documents cités :
**DE-A- 1 528 919
DE-A- 2 208 264
FR-A- 2 587 444
US-A- 3 034 319
US-A- 3 945 215**

(73) Titulaire : **COMMISSARIAT A L'ENERGIE ATOMIQUE Etablissement de Caractère Scientifique Technique et Industriel 31/33, rue de la Fédération F-75015 Paris (FR)**

(72) Inventeur : **Locatelli, Marcel 4 Pré Morard - Montbonnot F-38330 Saint Ismier (FR)**

(74) Mandataire : **Mongrédien, André et al c/o BREVATOME 25, rue de Ponthieu F-75008 Paris (FR)**

Jouve, 18, rue Saint-Denis, 75001 PARIS

## Description

La présente invention concerne une ligne de transfert de gaz liquéfié pour le transfert d'un gaz liquéfié entre un vase de stockage et un vase d'utilisation, comportant un tube de transfert ayant une première extrémité reliée au vase de stockage et une seconde extrémité apte à être reliée au vase d'utilisation, un tube externe entourant le tube de transfert et délimitant avec ce dernier un volume, et un écran formé par un élément disposé dans le volume interne entre le tube de transfert et le tube externe, l'écran ayant au moins une zone en contact avec un échangeur thermique pour établir une relation d'échange thermique entre ledit écran et les vapeurs du gaz liquéfié.

Les lignes de transfert pour fluide cryogénique permettent de transporter un fluide cryogénique d'un réservoir de stockage jusqu'à un réservoir d'utilisation. L'utilisation grandissante des fluides cryogéniques dans des domaines de plus en plus divers a créé le besoin de lignes de transfert cryogénique présentant de bonnes performances thermiques. En effet, du fait de sa température d'ébullition, qui est très inférieure à la température ambiante, le liquide est exposé à un flux de chaleur parasite par rayonnement, conduction et convection. Il s'ensuit une évaporation du gaz liquéfié qui produit une perte de liquide, ce qui constitue un inconvénient important.

C'est pourquoi on a cherché à réaliser, selon l'art antérieur, des lignes de transfert de gaz liquéfié présentant de faibles pertes thermiques en lignes, c'est-à-dire dans lesquelles le fluide se réchauffe et se vaporise aussi peu que possible au cours de son transfert d'un récipient dans l'autre.

D'autre part, la ligne de transfert doit présenter une faible inertie thermique ; cela signifie qu'une ligne de transfert à la température ambiante doit pouvoir être refroidie rapidement jusqu'à sa température d'utilisation.

On connaît déjà, selon l'art antérieur, des lignes de transfert pour un gaz liquéfié qui permettent d'atteindre les buts énoncés ci-dessus.

Une bonne isolation thermique par rapport au milieu extérieur est obtenue par l'utilisation d'un milieu isolant entre le tube de transfert et le tube externe. Cette isolation peut être constituée par une enveloppe épaisse en un matériau isolant tel que de la mousse ou par un espace sous vide qui permet de limiter l'apport de chaleur par convection et par conduction dans le gaz. Il est également connu d'utiliser une couche de matériau super-isolant constitué par exemple de films de plastique métallisé entre le tube de transfert et le tube externe. Ce matériau superisolant permet de réduire le flux de chaleur par rayonnement.

Il est également connu de placer un écran thermique dans l'espace situé entre le tube de transfert et le tube externe. Cet écran a pour fonction de réduire encore le flux par rayonnement. De plus, il peut être refroidi par un autre fluide ou par les vapeurs froides provenant de l'évaporation du liquide cryogénique. A titre d'exemple, la demande de brevet français n° 2 587 444 déposée le 19 septembre 1985 décrit une ligne de transfert de gaz liquéfié comportant un écran thermique muni d'un échangeur. L'écran est formé par un élément tubulaire ayant au moins une extrémité en contact avec un échangeur thermique pour établir une relation d'échange thermique entre l'écran et les vapeurs du gaz liquéfié, une quantité d'un gaz d'échange étant également contenue dans le volume interne.

Les diverses solutions qui viennent d'être énumérées ci-dessus permettent de réduire de manière très importante les apports de chaleur parasites provenant de l'extérieur, dans un facteur de l'ordre de quelques dizaines. Toutefois, la durée de mise en froid augmente avec la complexité de la ligne de transfert. Pour réduire cette durée de mise en froid, il est connu d'introduire une certaine quantité de gaz entre le tube de transfert et le tube externe afin d'assurer une mise en froid plus rapide. Le gaz est ensuite cryopompé lorsque la canalisation interne est froide, ce qui élimine la conduction par le gaz de mise en froid.

Toutefois, dans une ligne de transfert de ce type, la vapeur introduite dans la canalisation doit la traverser de part en part avant d'être récupérée.

Il est également connu d'assurer le retour des vapeurs vers le vase d'origine, c'est-à-dire le vase de stockage. Dans ce cas, la longueur de la ligne de transfert est limitée puisque les vapeurs se réchauffent et, à partir d'une certaine longueur de la ligne de transfert, elles ne permettent plus de refroidir l'écran parce que leur température est devenue trop élevée. La ligne n'est pas autonome. Son fonctionnement est lié à la nature de la source et de l'utilisation (vase, cryostat...).

En outre, dans toutes les lignes de transfert qui viennent d'être décrites, il est nécessaire de prévoir des espaceurs entre le tube externe et le tube de transfert et, lorsque la ligne de transfert comporte un écran intermédiaire, entre ce tube de transfert et le tube externe. Ces espaceurs sont responsables d'une bonne partie de l'apport de chaleur parasite par conduction.

La présente invention a pour objet une ligne de transfert de gaz liquéfié qui, tout en conservant les avantages des lignes de transfert actuellement connues, à savoir des pertes thermiques en ligne relativement faibles et une durée de mise en froid peu importante, permet en outre d'apporter certains avantages supplémentaires. Elle doit permettre de limiter la conduction thermique par les espaceurs ; elle permet en outre de réaliser des lignes de transfert de longueur importante.

Ces objets sont atteints conformément à l'invention par le fait que la ligne de transfert comporte des canalisations de dérivation comportant chacune une extrémité reliée au tube de transfert et une seconde extrémité reliée à une ligne de récupération des vapeurs du gaz liquéfié, un moyen de régulation de la section de passage desdites canalisations de dérivation, lesdites canalisations de dérivation étant en contact thermique avec l'écran.

Grâce à ces caractéristiques, on prélève les vapeurs du fluide cryogénique le long de la ligne de transfert et on utilise leur enthalpie pour refroidir un ou des écrans de dimensions appropriées. Les moyens de régulation de la section de passage de la canalisation de dérivation permettent de fixer le niveau de séparation entre le liquide et la vapeur dans chacune des canalisations de dérivation au voisinage de la paroi du tube de transfert. Les écrans sont mis en contact thermique avec les canalisations de dérivation. On obtient ainsi plusieurs avantages : les vapeurs ne parcourent pas toute la longueur de la ligne de transfert ; de ce fait, elles ne se réchauffent pas. L'efficacité du refroidissement est ainsi améliorée.

Les canalisations de dérivation jouent le rôle d'espaceurs entre le tube de transfert et le tube externe et entre le tube externe et l'écran ou les écrans intermédiaires. La circulation des vapeurs froides permet ainsi de limiter le flux de chaleur par conduction dans le tube de la dérivation.

Un autre avantage réside dans le fait qu'il est possible de créer une ligne de transfert de longueur importante en prévoyant une pluralité de canalisations de dérivation régulièrement réparties sur la longueur de cette ligne. En effet, étant donné que les vapeurs froides ne parcourent pas toute la longueur de la ligne, la longueur de cette dernière peut être augmentée. Enfin, la vitesse de mise en froid peut être augmentée par action sur la conductance (section de passage) des canalisations de récupération des vapeurs, c'est-à-dire sur les moyens de régulation de la section de passage de la canalisation de dérivation, ces moyens étant constitués par exemple par une vanne manuelle, ou tout système automatique.

D'autres caractéristiques et avantages de l'invention apparaîtront à la lecture de la des cription qui suit, qui représente seulement un mode d'exécution donné à titre illustratif et nullement limitatif.

– La figure 1 représente une ligne de transfert conforme à l'invention ;
– Les figures 2 et 3 sont des schémas qui illustrent un procédé permettant de réduire la durée de mise en froid de l'invention.

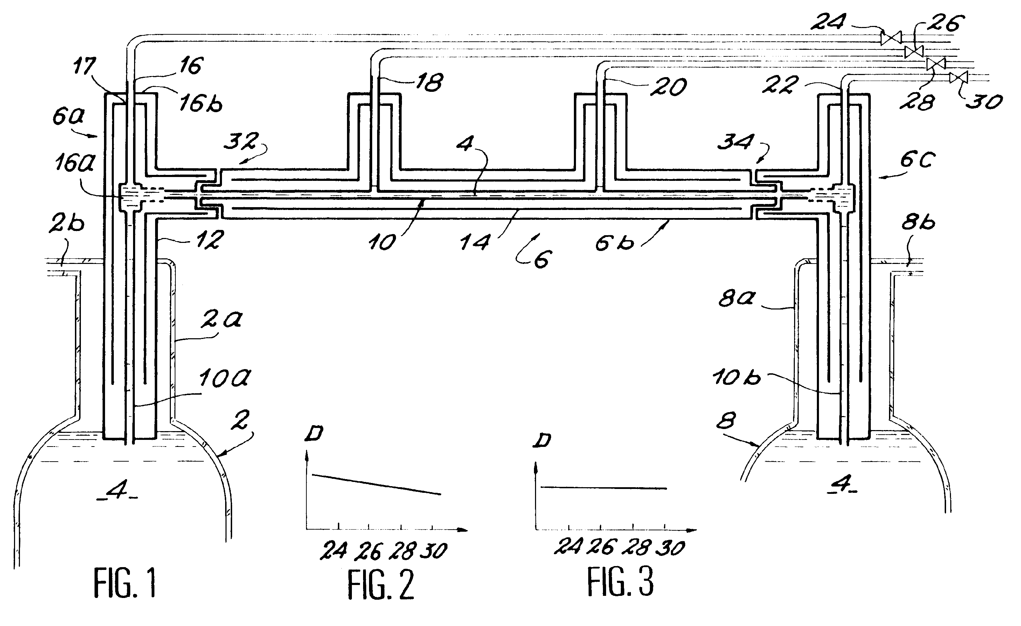

Sur la figure 1, la référence 2 désigne un vase de stockage contenant un gaz liquéfié 4. Ce gaz doit être acheminé au moyen de la ligne de transfert désignée par la référence générale 6 jusqu'à un vase d'utilisation 8. Le vase de stockage 2 comporte un col 2a auquel est raccordée une canalisation 2b permettant l'évacuation des vapeurs produites dans le vase de stockage 2. De la même manière, le vase d'utilisation 8 comporte un col 8a auquel est raccordée une canalisation d'évacuation 8b des vapeurs froides du gaz liquéfié 4.

La ligne de transfert de l'invention est constituée d'un tube de transfert 10 entouré par un tube externe 12. Le tube de transfert 10 comporte une première extrémité 10a plongeant dans le liquide contenu dans le vase de stockage et une seconde extrémité 10b plongeant dans le liquide contenu dans le vase d'utilisation.

Le tube externe 12 est fermé à chacune de ses extrémités, à savoir, respectivement à son extrémité plongeant dans le vase de stockage et à son extrémité plongeant dans le vase d'utilisation. En outre, un écran thermique 14 est interposé entre le tube de transfert 10 et le tube externe 12. Comme on l'a expliqué précédemment, la fonction de cet écran thermique est de réduire l'apport de chaleur par rayonnement provenant de l'extérieur.

Conformément à l'invention, on a prévu une pluralité de canalisations de dérivation 16, 18, 20, 22 raccordées chacune à une extrémité, au tube de transfert 10. Des vannes 24, 26, 28, 30 sont interposées sur chacune des canalisations 16, 18, 20, 22. Ces vannes ont pour fonction de régler la section de passage offerte à la vapeur contenue dans les canalisations 16, 18, 20 et 22 et, par suite, de régler le niveau de séparation entre le liquide et la vapeur. De préférence, ce niveau est réglé de telle manière qu'il soit situé approximativement au niveau de la paroi externe du tube de transfert 10.

Le fonctionnement de la ligne de transfert est le suivant : les vapeurs froides qui circulent dans les canalisations 16, 18, 20 et 22 refroidissent la partie de ces canalisations situées à l'intérieur du tube externe 10. Par exemple, pour la canalisation 16, le gaz refroidit sa partie située entre son extrémité 16a en communication avec le tube de transfert 10 et le point 16b où cette canalisation traverse le tube externe 12. De préférence, la partie de la canalisation 16 située entre les points 16a et 16b est réalisée en un matériau mauvais conducteur de la chaleur. L'enthalpie des vapeurs froides du gaz circulant dans la canalisation 16 est communiquée à l'écran intermédiaire 14. On veille à assurer un bon contact thermique entre l'écran 14 et chacune des canalisations 16, 18, 20 et 22. Ainsi, on réalise un échange thermique au point de contact 17 entre l'écran et la dérivation. De cette manière, l'écran 14, au lieu d'être refroidi seulement à l'une de ses extrémités par un échangeur, ou, sur toute sa longueur, par un gaz qui se réchauffe progressivement, comme selon l'art antérieur, est refroidi à espaces réguliers. L'efficacité de ce refroidissement est donc améliorée.

Dans le mode de réalisation représenté sur la figure 1, la ligne de transfert est constituée de trois parties, à savoir une partie verticale 6a introduite dans le col 2a du vase de stockage 2, un tronçon intermédiaire horizontal 6b et enfin une partie verticale 6c introduite dans le col 8a du vase de stockage 8. La partie 6a est raccordée à la partie intermédiaire horizontale 6b par l'intermédiaire d'un raccord mâle/femelle 32. De la même manière, la partie intermédiaire 6b est raccordée à la partie 6c par l'intermédiaire d'un raccord mâle/femelle 34. Les raccords 32 et 34 sont par exemple des raccords de type Johnston®. La partie intermédiaire 6b constitue ainsi un tronçon de ligne autonome qui peut constituer une partie d'une ligne de plus grande longueur en raccordant simplement bout à bout plusieurs tronçons tels que le tronçon 6b. Comme on peut le constater sur la figure 1, les vides d'isolement de chacun des tronçons qui composent la ligne sont séparés. Selon un autre mode de réalisation, la ligne de transfert peut être réalisée d'une seule pièce avec les parties verticales 6a et 6c.

En outre, il est à noter que l'écran intermédiaire 14 a été représenté d'une seule pièce. Toutefois, cet écran intermédiaire peut être constitué de plusieurs tronçons isolés thermiquement ou non les uns par rapport aux autres, chacun des tronçons de cet écran étant en contact thermique avec une des canalisations de dérivation telles que 16, 18, 20, 22.

L'écran 14 est constitué par une tresse réalisée à partir d'un matériau bon conducteur de la chaleur. Il peut être également constitué par un tube ouvert ou par un tube fermé.

Les figures 2 et 3 sont deux schémas qui illustrent un procédé permettant une mise en froid plus rapide d'une ligne de transfert conforme à l'invention. La figure 2 représente le débit D du gaz (ou la section de passage offerte à ce gaz) contenu dans chacune des canalisations 16, 18, 20 et 22. Pendant la période de mise en froid, la vanne 24 est la plus ouverte, de manière à offrir une plus grande section de passage. Il en résulte ainsi une évaporation accrue du gaz au niveau 16a et, par suite, un refroidissement accéléré des tronçons compris entre les points 16a et 16b de la canalisation de dérivation 16. L'ouverture des autres vannes, à savoir 26, 28 et 30 va en décroissant. La figure 3 représente la position d'équilibre lorsque la mise en froid de la ligne de transfert a été obtenue. On peut constater que les vannes 24, 26, 28 et 30 sont ouvertes à la même valeur.

## Revendications

1. Ligne de transfert de gaz liquéfié pour le transfert d'un gaz liquéfié entre un vase de stockage (2) et un vase d'utilisation (8), comportant un tube de transfert (10) ayant une première extrémité (10a) reliée au vase de stockage et une seconde extrémité (10b) apte à être reliée au vase d'utilisation (8), un tube externe (12) entourant le tube de transfert (10) et délimitant avec ce dernier un volume, et un écran formé (14) par un élément disposé dans le volume interne entre le tube de transfert (10) et le tube externe (12), l'écran ayant au moins une zone (17) en contact avec un échangeur thermique pour établir une relation d'échange thermique entre ledit écran et les vapeurs du gaz liquéfié, caractérisée par des canalisations de dérivation (16, 18, 20, 22) comportant chacune une extrémité (16a) reliée au tube de transfert (10) et une seconde extrémité reliée à une ligne de récupération des vapeurs du gaz liquéfié, des moyens (24, 26, 28, 30) de régulation de la section de passage desdites canalisations de dérivation (16, 18, 20, 22), lesdites canalisations de dérivation étant en contact thermique avec ledit écran (14).

2. Ligne de transfert selon la revendication 1, caractérisée en ce qu'elle est munie d'un raccord (32, 34) à chacune de ses extrémités.

3. Ligne de transfert selon la revendication 2, caractérisée en ce que le raccord (32, 34) est du type Johnston.

4. Ligne de transfert selon l'une quelconque des revendications 1 à 3, caractérisée en ce que le volume compris entre le tube de transfert (10) et l'écran (14) et/ou le volume compris entre l'écran (14) et le tube externe (12) est rempli au moins partiellement d'un matériau superisolant.

5. Ligne de transfert selon l'une quelconque des revendications 1 à 4, caractérisée en ce que l'écran (14) est constitué par un tube ouvert, ou fermé.

6. Ligne de transfert selon l'une quelconque des revendications 1 à 4, caractérisée en ce que l'écran (14) est constitué par une tresse réalisée à partir d'un matériau bon conducteur de la chaleur.

7. Ligne de transfert selon l'une quelconque des revendications 1 à 6, caractérisée en ce que ladite au moins une canalisation de dérivation (16, 18, 20, 22) est réalisée en un matériau mauvais conducteur de la chaleur afin de constituer un espaceur à flux de chaleur réduit.

## Patentansprüche

1. Flüssiggas-Übertragungsleitung zum Transport von Flüssiggas zwischen einem Speicherbehälter (2) und einem Verwendungsbehälter (8), die ein Übertragungarohr (10), das ein erstes, mit dem Speicherbehälter verbundenes Ende (10a) und ein zweites Ende (10b) besitzt, das geeignet ist, mit dem Verwendungsbehälter (8) verbunden zu werden, ein externes Rohr (12), das das Transportrohr (10) umgibt und mit letzterem ein Volumen begrenzt, und einen Schirm (14) aufweist, der von einem in dem internen Volumen zwischen den Transportrohr (10) und den externen Rohr (12) angeordneten Element gebildet wird, wobei der Schirm wenigstens einen Bereich (17) in Kontakt mit einem Wärmetauscher hat, um eine Wärmeaustauschverbindung zwischen dem Schirm und den Dämpfen des Flüssiggases herzustellen, gekennzeichnet durch Abzweigungskanäle (16, 18, 20, 22), die jeweils ein Ende (16a), das mit dem Transportrohr (10) verbunden ist, und ein zweites Ende, das mit einer Leitung zum Auffangen der Dämpfe des Flüssiggases verbunden ist, und Vorrichtungen (24, 26, 28, 30) zum Regeln des Durchgangsquerschnitts der Abzweigungskanäle (16, 18, 20, 22) aufweisen, wobei die Abzweigungskanäle in thermischem Kontakt mit dem Schirm (14) stehen.

2. übertragungsleitung nach Anspruch 1, dadurch gekennzeichnet, daß sie mit einem Anschlußstnck (32, 33) an jeder ihrer Enden versehen ist.

3. Übertragungsleitung nach Anspruch 2, dadurch gekennzeichnet, daß das Anschlußstück (32, 34) vom Johnstontyp ist.

4. Übertragungsleitung nach einem der Ansprüche 1 bis 3, dadurch gekennzeichnet, daß das Volumen zwischen den Transportrohr (10) und dem Schirm (14) und/oder das Volumen zwischen dem Schirm (14) und dem externen Rohr (12) wenigstens teilweise mit einem superisolierenden Material gefüllt ist.

5. Übertragungsleitung nach einen der Ansprüche 1 bis 4, dadurch gekennzeichnet, daß der Schirm (14) aus einem offenen oder geschlossenen Rohr besteht.

6. Übertragungsleitung nach einem der Ansprüche 1 bis 4, dadurch gekennzeichnet, daß der Schirm (14) aus einem Geflecht aus einem gut wärmeleitenden Material besteht.

7. Übertragungsleitung nach einem der Ansprüche 1 bis 6, dadurch gekennzeichnet, daß der wenigstens eine Abzweigungskanal (16, 18, 20, 22) aus einem schlecht wärmeleitenden Material besteht, um ein Abstandsstück mit einen reduzierten Wärmefluß zu bilden.

## Claims

1. Liquefied gas transfer line for the transfer of a liquefied gas between a storage vessel (2) and a use vessel (8) having a transfer tube (10) with a first end (10a) connected to the storage vessel and a second end (10b) connectable to the use vessel (8), an outer tube (12) surrounding the transfer tube (10) and defining with the latter a volume, and a shield (14) formed by an element placed between the internal volume between the transfer tube (10) and the outer tube (12), the shield having at least one zone (17) in contact with a heat exchanger in order to establish a heat exchange relationship between said shield and the liquefied gas vapours, characterized by bypasses (16, 18, 20, 22), each having one end (16a) connected to the transfer tube (10) and a second end connected to a liquefied gas vapour recovery line, together with means (24, 26, 28, 30) for regulating the passage cross-section of said bypasses (16, 18, 20, 22), which are in thermal contact with said shield (14).

2. Transfer line according to claim 1, characterized in that it has a coupling (32, 34) at each of its ends.

3. Transfer line according to claim 2, characterized in that the coupling (32, 34) is a Johnston coupling.

4. Transfer line according to any one of the claims 1 to 3, characterized in that the volume between the transfer tube (10) and the shield (14) and/or the volume between the shield (14) and the outer tube (12) is at least partly filled with a superinsulating material.

5. Transfer line according to any one of the claims 1 to 4, characterized in that the shield (14) is constituted by an open or closed tube.

6. Transfer line according to any one of the claims 1 to 4, characterized in that the shield (14) is constituted by a strand made from a good heat conducting material.

7. Transfer line according to any one of the claims 1 to 6, characterized in that the at least one bypass (16, 18, 20, 22) is made from a poor heat conducting material in order to constitute a reduced heat flux spacer.

FIG. 1

FIG. 2

FIG. 3

EP 0 325 873 B1